# EUROPEAN PATENT APPLICATION

(11) **EP 1 178 618 A2**
(43) Date of publication of application: **06.02.2002**
(21) Application number: 01106822.8
(22) Date of filing: 19.03.2001
(51) Int. Cl.: H04H 1/00, H01Q 1/12

(54) **Digital demodulator comprising a system for controlling a peripheral apparatus**

(30) Priority: 13.07.2000 JP 2000213127
(71) Applicant: MITSUBISHI DENKI KABUSHIKI KAISHA, Tokyo 100-8310 (JP)
(72) Inventor: Ushio, Tomohiro, Chiyoda-ku, Tokyo 100-8310 (JP)
(74) Representative: Popp, Eugen, Dr.

(57) **Abstract**

The digital demodulator comprises a demodulation section (1), peripheral equipment control section (2), a main control section (4), and a discrimination section (9). When the peripheral equipment control section (2) receives a control signal from the main control section (4), it performs peripheral equipment control. The discrimination section (9) discriminates whether or not the control signal is related to the control of the demodulation section (1). When the control is related to the control of the demodulation section (1), the discrimination section (9) transmits the control signal corresponding to the control that the peripheral equipment control section (2) performs to the demodulati

## Description

### FIELD OF THE INVENTION

The present invention relates to a digital demodulator with a peripheral equipment control function for controlling various peripheral equipment, such as an antenna rotor. More particularly this invention relates to a digital demodulator with a peripheral equipment control function which can be realized by a digital demodulation LSI in which a peripheral equipment control function is incorporated.

### BACKGROUND OF THE INVENTION

Conventionally, a receiver or the like of a digital satellite broadcasting is provided with a function of digital demodulation for an analog signal received by an antenna along with a function of controlling for peripheral equipment such as a rotator for changing the direction of the antenna.

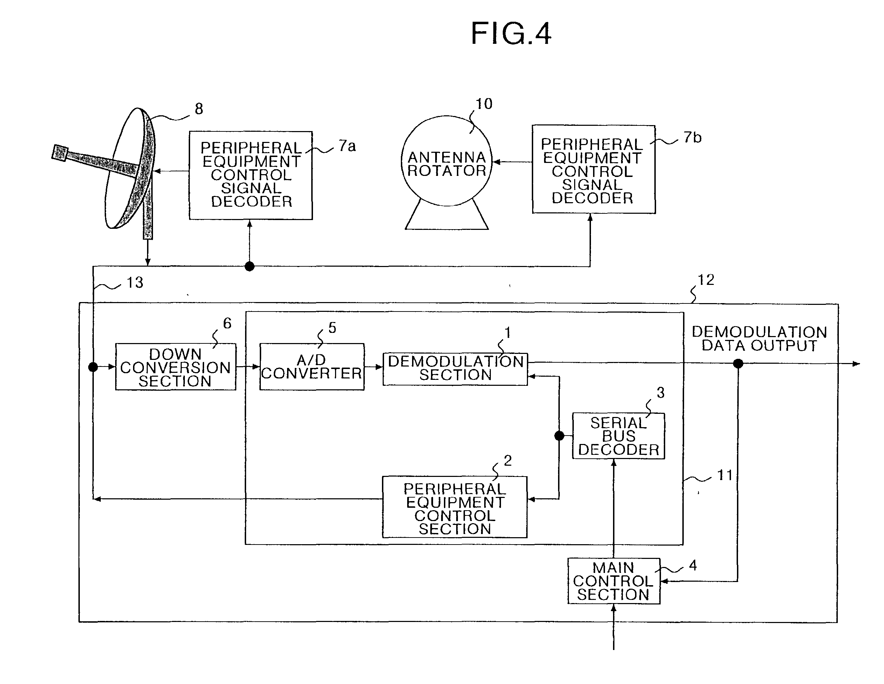

Fig. 4 is a view showing a constitution of a digital satellite broadcasting receiver which corresponds to a digital demodulator having a conventional peripheral equipment control function. A high-frequency digital modulation signal transmitted from a satellite is received at an antenna 8 and is converted into an intermediate frequency in a receiving circuit incorporated in the antenna 8. The digital modulation signal converted into the intermediate frequency is inputted to a down conversion section 6 in a digital demodulator 12 by means of a coaxial cable 13. The down conversion section 6 converts the digital modulation signal converted into the intermediate frequency into a digital modulation signal of a baseband. The digital modulation signal of the baseband is inputted to an A/D converter 5 in a digital demodulation LSI 11, is converted into a digital signal, and is outputted to a demodulation section 1. The demodulation section 1 demodulates the inputted digital signal and outputs it as demodulation data.

A main control section 4 receives an input from an external section or the demodulation data output from the demodulation section 1 and outputs a control signal to the demodulation section 1 and a peripheral equipment control section 2 via a serial bus decoder 3 in the digital demodulation LSI 11. The peripheral equipment control section 2 receives the control signal from the main control section 4 and outputs a peripheral equipment control signal to peripheral equipment control signal decoders 7a, 7b. The peripheral equipment control signal decoder 7a receives the signal from the peripheral equipment control section 2 and controls the receiving circuit in the antenna 8. The peripheral equipment control signal decoder 7b receives the signal from the peripheral equipment control section 2 and controls the drive of an antenna rotator 10.

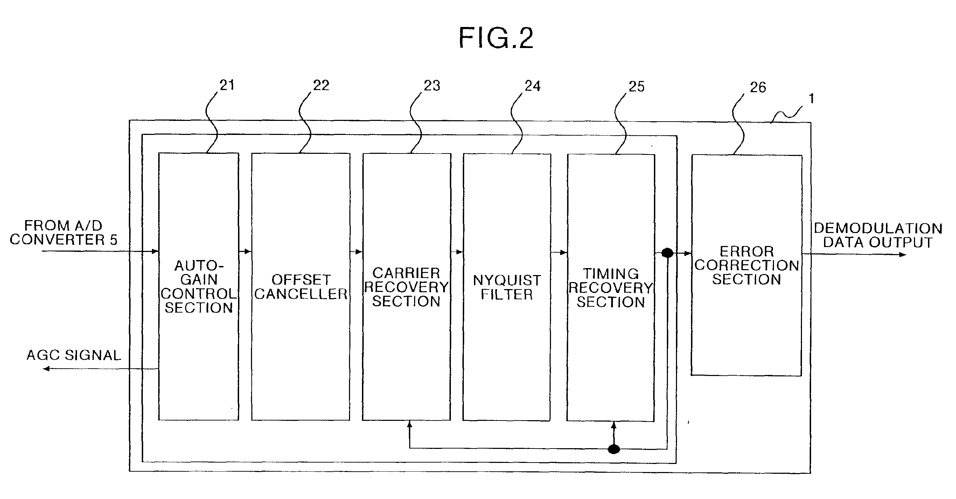

Operation of the demodulation section 1 will be explained with reference to Fig. 2. There are cases in which a gain of a signal, an offset of a DC level, a frequency drift, a timing drift, or the like occurs in the digital signal of the baseband inputted to the demodulation section 1.

The digital signal of the baseband inputted to the demodulation section 1 is inputted to an auto-gain control section 21. The auto-gain control section 21 regulates the input range of the A/D converter 5 and the amplitude of the digital signal of the inputted baseband and transmits an AGC signal to the A/D converter 5. An offset canceller 22 performs a correction of an offset of a DC level. A carrier recovery section 23 corrects a frequency drift. A timing recovery section 25 regulates a sampling timing of a Nyquist point based on the data outputted via a Nyquist filter 24.

The carrier recovery section 23 and the timing recovery section 25 detect a frequency error and a timing error, respectively, based on the data outputted from the timing recovery section 25 and perform a loop control for correction based on the respective detected errors. The correction by the loop control moves on to a stable state where an error has become fully small, that is, a lock state, via a state where a correction for an error is not fully performed and a correction operation for an error is performed, that is, an acquisition operation state. The output, after this lock state occurs, is outputted to an error correction section 26.

The error correction section 26 needs to detect the synchronization of the outputted data and recognize the start and the list of the data. After this recognition, the error correction section 26 decides whether or not there is an error in the received data, and if there is an error, corrects this error, and outputs it, for example, to an MPEG decoder or the like which is not shown in the drawing as demodulation data. The loop control in the error correction section 26, after passing through the acquisition operation state for detecting the synchronization of the data, detects the synchronization and then moves on to the lock state. The output, after this lock state occurs, is outputted as the demodulation data.

When the receiving condition of a currently received signal becomes worse and normal receiving cannot be performed or in the case in which a different signal is newly received, the main control section 4 transmits a control signal for ordering a reset to the demodulation section 1 and the peripheral equipment control section 2 via the serial bus decoder 3. The demodulation section 1 which has received the control signal for ordering the reset resets the present loop control and resumes the procedure from the first acquisition operation.

As described above, the digital demodulator 12 performs the demodulation for the digital signal and the control for the peripheral equipment. Recently, there are many cases in which the demodulation section 1 and the peripheral equipment control section 2 are incorporated in the same LSI.

However, depending to the control content of the peripheral equipment, there is a case in which the reset for the demodulation section 1 should be performed at the same time as the reset for the peripheral equipment For example, in the case in which the change of the received frequency by the antenna 8 or the change of the direction of the antenna 8 by the antenna rotator 10 is performed, a quicker correction control can be performed when the reset for the demodulation section 1 is performed at the same time as the control for the peripheral equipment so that the correction operation is done over again from the beginning. In the case in which the digital signal is not received, when the demodulation section 1 is made in a stand-by condition so as to restrain the consumption of the electric power, it is preferred that the power supply of the peripheral equipment is turned off at the same time as the indication of power-saving for the demodulation section 1 so as to restrain the power consumption by the peripheral equipment.

However, in the digital demodulator with a conventional peripheral equipment control function described above, since the control for the demodulation section 1 and the control for the peripheral equipment by the peripheral equipment control section 2 are performed respectively independently, even when the control indication is performed for the demodulation section 1 and the peripheral equipment control section 2 at the same time, the control indication for the demodulation section 1 from the main control section 4 and the control indication for the peripheral equipment control section 2 from the main control section 4 are transmitted respectively separately. Accordingly, there are problems that the control by the main control section 4 becomes complex, and further a quick control cannot be performed when the control for the demodulation section 1 and the control for the peripheral equipment control section 2 are related.

### SUMMARY OF THE INVENTION

It is an object of the present invention to obtain a digital demodulator with a peripheral equipment control function by which the control for the demodulation section and the peripheral equipment control section can be performed easily at an appropriate time when the demodulation section and the peripheral equipment control section are controlled at the same time.

In order to achieve the above described object, a digital demodulator with a peripheral equipment control function according to the present invention is characterized in that a digital signal demodulator has a demodulation section performing a digital demodulating procedure for an input signal, a peripheral equipment control section being connected to peripheral equipment and performing the control for the peripheral equipment, and a main control section controlling the demodulation section and the peripheral equipment control section, wherein said demodulator comprises a discrimination unit discriminating whether or not the control for the peripheral equipment that the peripheral equipment control section performs when receiving the control signal from the main control section is the control related to the demodulation section, and when the control for the peripheral equipment is the control related to the demodulation section, transmitting the control signal of the demodulation section corresponding to the control state of the peripheral equipment to the demodulation section.

According to the above invention, the discrimination unit discriminates whether or not the control for the peripheral equipment that the peripheral equipment control section performs when receiving the control signal from the main control section is the control related to the demodulation section, and when the control for the peripheral equipment is the control related to the demodulation section, transmits the control signal of the demodulation section corresponding to the control state of the peripheral equipment to the demodulation section.

A digital demodulator with a peripheral equipment control function according to the next invention characterized in that a digital signal demodulator has a demodulation section performing a digital demodulating procedure for an input signal, a peripheral equipment control section being connected to peripheral equipment and performing the control for the peripheral equipment, and a main control section controlling the demodulation section and the peripheral equipment control section, wherein said demodulator comprises a discrimination unit discriminating whether or not the control state of the demodulation section is the control state related to the peripheral equipment control section, and when the control state of the demodulation section is the control state related to the peripheral equipment control section, transmitting the control signal of the peripheral equipment control section corresponding to said control state.

According to the above invention, the discrimination unit discriminating whether or not the control state of the demodulation section is the control state related to the peripheral equipment control section, and when the control state of the demodulation section is the control state related to the peripheral equipment control section, transmits the control signal of the peripheral equipment control section corresponding to said control state.

Further, the demodulation section, the peripheral equipment control section, and the discrimination unit are formed on the same semiconductor substrate.

Other objects and features of this invention will become apparent from the following description with reference to the accompanying drawings.

### BRIEF DESCRIPTION OF THE DRAWINGS

Fig. 1 is a view showing a constitution of a digital satellite broadcasting receiver which is the first embodiment of the present invention;
Fig. 2 is a view showing a detailed constitution of the demodulation section shown in Fig. 1;
Fig. 3 is a view showing a constitution of a digital satellite broadcasting receiver which is the second embodiment of the present invention; and
Fig. 4 is a view showing a constitution of a digital demodulator having a conventional peripheral equipment control function.

### DESCRIPTION OF THE PREFERRED EMBODIMENTS

Two preferred embodiments of the digital demodulator with the peripheral equipment control function according to the present invention will be explained in detail below while referring to the attached drawings.

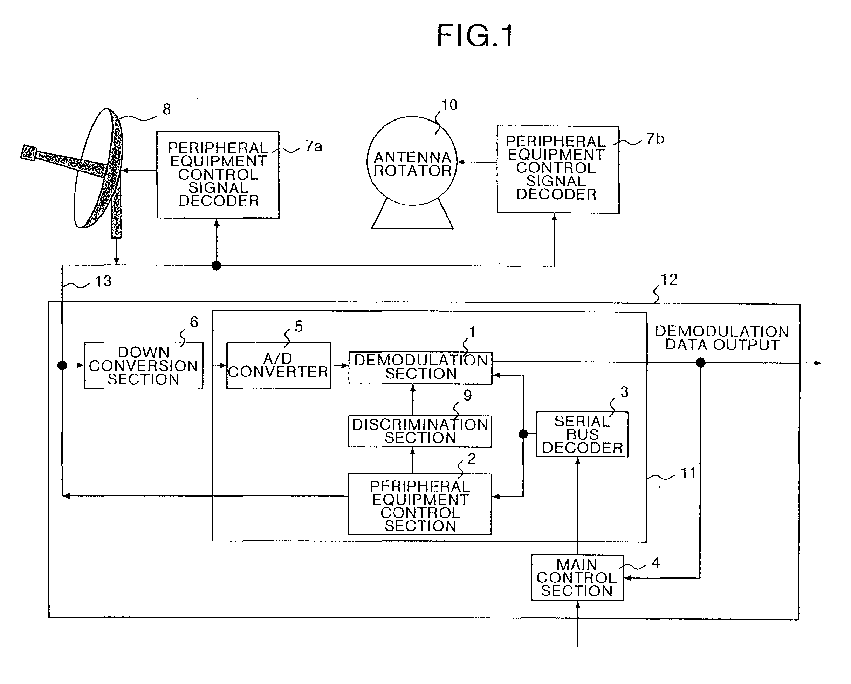

Fig. 1 is a view showing a constitution of a digital satellite broadcasting receiver which is the most suitable for the first embodiment of the present invention. In Fig. 1, a high-frequency digital modulation signal transmitted from a satellite is received at an antenna 8 and is converted into an intermediate frequency by a receiving circuit incorporated in the antenna 8. The digital modulation signal converted into the intermediate frequency is inputted to a down conversion section 6 in a digital demodulator 12 by means of a coaxial cable 13. The down conversion section 6 converts the digital modulation signal converted into the intermediate frequency into a digital modulation signal of a baseband. The digital modulation signal of the baseband is inputted to an A/D converter 5 in a digital demodulation LSI 11, is converted into a digital signal, and is outputted to a demodulation section 1. The demodulation section 1 demodulates the digital signal and outputs it as demodulation data.

A main control section 4 receives an input from an external section or the demodulation data output from the demodulation section 1 and outputs a control signal to the demodulation section 1 and a peripheral equipment control section 2 via a serial bus decoder 3 in the digital demodulation LSI 11. The peripheral equipment control section 2 receives the control signal from the main control section 4 and outputs a peripheral equipment control signal to peripheral equipment control signal decoders 7a, 7b. The peripheral equipment control signal decoder 7a receives the signal from the peripheral equipment control section 2 and controls the receiving circuit in the antenna 8. The peripheral equipment control signal decoder 7b receives the signal from the peripheral equipment control section 2 and controls the drive of an antenna rotator 10.

A discrimination section 9 discriminates the control signal that the peripheral equipment control section 2 receives from the main control section 4 and, when the control signal is a signal related to the demodulation signal 1, transmits a corresponding control signal to the demodulation section.

Next, operation of the demodulation section 1 will be explained with reference to Fig. 2. There are cases in which a gain of a signal, an offset of a DC level, a frequency drift, a timing drift, or the like occurs in the digital signal of the baseband inputted to the demodulation section 1.

The digital signal of the baseband inputted to the demodulation section 1 is inputted to an auto-gain control section 21. The auto-gain control section 21 regulates the input range of the A/D converter 5 and the amplitude of the digital signal of the inputted baseband and transmits an AGC signal to the A/D converter 5. An offset canceller 22 performs a correction of an offset of a DC level. A carrier recovery section 23 corrects a frequency drift. A timing recovery section 25 regulates a sampling timing of a Nyquist point based on the data outputted via a Nyquist filter 24.

The carrier recovery section 23 and the timing recovery section 25 detect a frequency error and a timing error, respectively, based on the data outputted from the timing recovery section 25 and perform a loop control for correction based on the respective detected errors. The correction by the loop control moves on to a stable state where an error has become fully small, that is, a lock state, via a state where a correction for an error is not fully performed and a correction operation for an error is performed, that is, an acquisition operation state. The output, after this lock state occurs, is outputted to an error correction section 26.

The error correction section 26 needs to detect the synchronization of the outputted data and recognize the start and the list of the data. After this recognition, the error correction section 26 decides whether or not there is an error in the received data, and if there is an error, corrects this error, and outputs it, for example, to an MPEG decoder or the like which is not shown in the drawing as demodulation data. The loop control in the error correction section 26, after passing through the acquisition operation state for detecting the synchronization of the data, detects the synchronization and then moves on to the lock state. The output, after this lock state occurs, is outputted as the demodulation data.

Here, in the case in which a receiving condition of a currently received signal becomes worse so that normal receiving cannot be performed or in the case in which a different signal is newly received, the main control section 4 transmits a control signal for ordering a reset to the demodulation section 1 and the peripheral equipment control section 2 via the serial bus decoder 3. The demodulation section 1 which has received the control signal for ordering the reset resets the present loop control and resumes the procedure from the first acquisition operation.

In the first embodiment, when the peripheral equipment control section 2 receives the control signal from the main control section 4 and controls peripheral equipment, the discrimination section 9 discriminates whether or not this control signal is the control related to the demodulation section 1, and when the control that the peripheral equipment control section 2 performs is the control related to the demodulation section 1, the discrimination section 9 transmits a control signal corresponding to the control that the peripheral equipment control section 2 performs to the demodulation section 1. Therefore, the main control section 4 can easily control both the peripheral equipment control section 2 and the demodulation section 1 only by transmitting the control signal to the peripheral equipment control section 2, and thus the number of controls that the main control section 4 performs is reduced, whereby the load of the main control section 4 can be reduced.

For example, when the frequency is changed by controlling the receiving circuit of the antenna 8 or when the direction of the antenna 8 is changed by controlling the antenna rotator 10, the discrimination section 9 transmits the control signal to the demodulation section 1 only by transmitting the control signal from the main control section 4 to the peripheral equipment control section 2, and the correction operation of the demodulation section 1 according to the frequency change or the antenna direction change is reset without transmitting the control signal from the main control section 4 to the demodulation section 1.

Next, a second embodiment of the present invention will be explained below. In the first embodiment described above, when the control signal sent to the peripheral equipment control section 2 is the control signal related to the demodulation section 1, the discrimination section 9 transmits this control signal to the demodulation section 1. In the second embodiment, when the control signal sent to the demodulation section 1 is the control signal related to the control by the peripheral equipment control section 2, the discrimination section 9 transmits this control signal to the peripheral equipment control section 2.

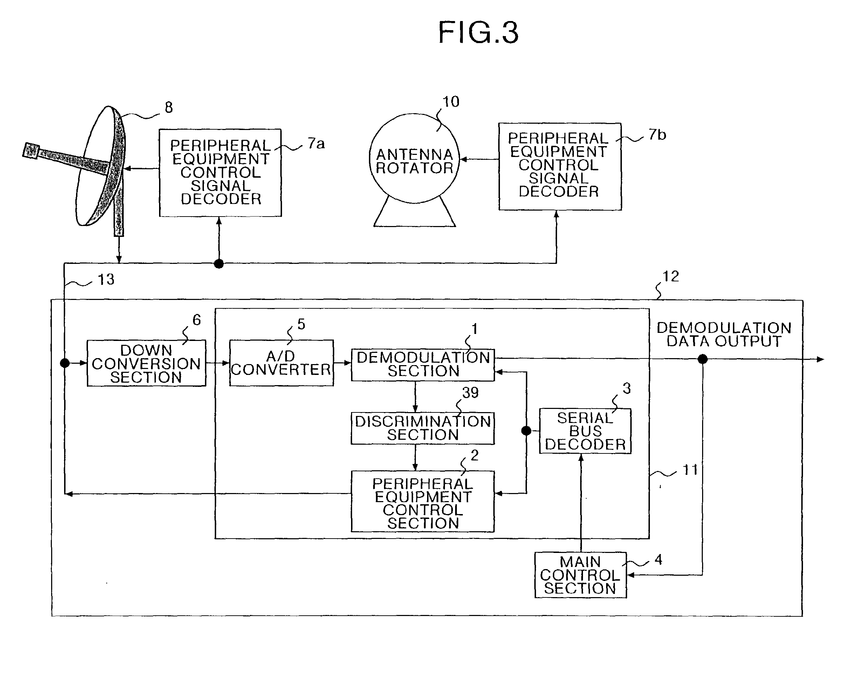

Fig. 3 is a view showing a constitution of a digital satellite broadcasting receiver according to the second embodiment. This digital satellite broadcasting receiver has a discrimination section 39 as a substitute for the discrimination section 9. Other constitution is the same as that of the first embodiment, and like reference numerals are attached to like constitutional sections. The discrimination section 39 discriminates whether or not the control state of the demodulation section 1 is the control state related to the peripheral equipment control section 2, and when the control state of the demodulation section 1 is the control state related to the peripheral equipment control section 2, transmits the control signal of the peripheral equipment control section 2 corresponding to the control state of the demodulation section 1.

In the second embodiment, the main control section 4 can easily control both the peripheral equipment control section 2 and the demodulation section 1 only by transmitting the control signal to the demodulation section 1, and thus the number of controls that the main control section 4 performs is reduced, whereby the load of the main control section 4 can be reduced.

For example, in the case in which the digital signal is not received, when the main control section 4 transmits the control signal for making the demodulation section 1 in a stand-by condition, the discrimination section 39 transmits the control signal by which the peripheral equipment control section 2 makes the peripheral equipment in a stand-by condition to the peripheral equipment control section 2.

As described above, according to this invention, the discrimination unit discriminates whether or not the control for the peripheral equipment that the peripheral equipment control section performs when receiving the control signal from the main control section is the control related to the demodulation section, and when the control for the peripheral equipment is the control related to the demodulation section, transmits the control signal of the demodulation section corresponding to the control state of the peripheral equipment to the demodulation section, thereby producing an effect that the control for the demodulation section and the peripheral equipment control section can be performed easily at an appropriate time.

According to the next invention, the discrimination unit discriminating whether or not the control state of the demodulation section is the control state related to the peripheral equipment control section, and when the control state of the demodulation section is the control state related to the peripheral equipment control section, transmits the control signal of the peripheral equipment control section corresponding to said control state, thereby producing an effect that the control for the demodulation section and the peripheral equipment control section can be performed easily at an appropriate time.

Further, the demodulation section, the peripheral equipment control section, and the discrimination unit are formed on the same semiconductor substrate, thereby producing an effect that the equipment body of the digital demodulator can be miniaturized.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A digital demodulator with a peripheral equipment control function comprising:
a demodulation section (1) performing a digital demodulating procedure for an input signal;
a peripheral equipment control section (2) being connected to a peripheral equipment and controlling said peripheral equipment;
a main control section (4) controlling said demodulation section (1) and said peripheral equipment control section (2); and
a discrimination unit (9) discriminating whether or not the control for said peripheral equipment that said peripheral equipment control section (2) performs when receiving the control signal from said main control section (4) is the control related to said demodulation section (1), and when the control for said peripheral equipment is the control related to said demodulation section (1), transmitting the control signal of said demodulation section (1) corresponding to the control state of said peripheral equipment to said demodulation section (1).

2. A digital demodulator with a peripheral equipment control function comprising:
a demodulation section (1) performing a digital demodulating procedure for an input signal;
a peripheral equipment control section (2) being connected to a peripheral equipment and controlling said peripheral equipment;
a main control section (4) controlling said demodulation section (1) and said peripheral equipment control section (2); and
a discrimination unit (39) discriminating whether or not the control state of said demodulation section (1) is the control state related to said peripheral equipment control section (2), and when the control state of said demodulation section (1) is the control state related to said peripheral equipment control section (2), transmitting the control signal of said peripheral equipment control section (2) corresponding to the control state to said peripheral equipment control section (2).

3. The digital demodulator with a peripheral equipment control function according to claim 1 or 2, wherein said demodulation section (1), said peripheral equipment control section (2), and said discrimination unit (9, 39) are formed on the same semiconductor substrate.
